Europäisches Patentamt

European Patent Office

Office européen des brevets

(11) Veröffentlichungsnummer: **0 239 930**
**A2**

# EUROPÄISCHE PATENTANMELDUNG

(21) Anmeldenummer: 87104445.9

(51) Int. Cl.4: **F16L 55/12**

(22) Anmeldetag: 25.03.87

(30) Priorität: 29.03.86 DE 3610626

(43) Veröffentlichungstag der Anmeldung:
07.10.87 Patentblatt 87/41

(84) Benannte Vertragsstaaten:
BE DE FR GB IT NL SE

(71) Anmelder: **Siemens Aktiengesellschaft Berlin und München**
**Wittelsbacherplatz 2**
**D-8000 München 2(DE)**

(72) Erfinder: **Veenhoff, Bernd, Dipl.-Ing.**
**Eichenstrasse 4**
**D-8521 Langensendelbach(DE)**
Erfinder: **Naess, Ludvig**
**Mostmyra 3a**
**N-7075 Tiller(NO)**
Erfinder: **v. Johansen, Trond, Dr.**
**Ole Nordgaards vei 78**
**N-7000 Trondheim(NO)**
Erfinder: **Ruch, Ola, Dipl.-Ing.**
**Oevreflataasun 32**
**N-7079 Flataasen(NO)**

(54) Vorrichtung zum Erzeugen von radial auf eine zylindrische Fläche wirkenden Kräften, insbesondere Anstell- oder Haltekräften.

(57) Es ist ein zylinderförmiger Körper vorgesehen, dessen Mantel als Zylinderfeder (4) ausgebildet ist. Ihr Außendurchmesser ist im entspannten Zustand größer als der Innendurchmesser der zylindrischen Fläche. Die beiden Enden der Zylinderfeder (4) sind durch einen Antrieb (6) um die Federachse relativ gegeneinander derart verdrehbar, daß der Außendurchmesser der Zylinderfeder (4) bei eingeschaltetem Antrieb (6) auf einen vorgegebenen Durchmesser verkleinert wird, der kleiner ist als der Durchmesser der zylindrischen Fläche. Durch Um-kehren der Drehrichtung des Antriebs (6) entspannt sich die Zylinderfeder (4) und drückt gegen die zylindrische Fläche.

FIG 1

## Vorrichtung zum Erzeugen von radial auf eine zylindrische Fläche wirkenden Kräften, insbesondere Anstell-oder Haltekräften

Die Erfindung bezieht sich auf eine Vorrichtung zum Erzeugen von radial auf eine zylindrische Fläche wirkenden Kräften, insbesondere Anstell-oder Haltekräften.

Zum Erzeugen von radial nach außen wirkenden Kräften ist es bekannt, auf einem mit Flanschen versehenen zylindrischen Körper eine rohrförmige elastische Blase anzuordnen und diese mit Preßgas zu beaufschlagen, so daß sie aufgeblasen wird und nach außen drückt. Eine Vorrichtung dieser Art wird gemäß der DE-C 31 42 768 als Verschlußvorrichtung verwendet. Die bekannte Verschlußvorrichtung wird im Störungsfall, also wenn ein Leck in einer Rohrleitung auftritt, nach Art eines Kolbens durch den Druck des Leitungsmediums durch die Rohrleitung geschwemmt. In der Nähe der Leckstelle wird die Verschlußvorrichtung in der Rohrleitung arretiert. Hierzu werden mittels Fernzündung Preßgasflaschen, die innerhalb des Hohlzylinders angeordnet sind, geöffnet, und Gas in die Gummiblase eingeblasen, so daß sich die äußere zylindrische Hülse an die Rohrwand legt und die Verschlußvorrichtung in der Rohrleitung festgebremst wird. Dadurch gelangt kein weiteres Medium mehr zu der Leckstelle. Die bekannte Verschlußvorrichtung kann zwar große Haltekräfte innerhalb der Rohrleitung aufbringen, doch falls geringe Undichtigkeiten im aufblasbaren Element auftreten, ist es nicht mehr möglich, einen definierten hohen Anpreßdruck für längere Zeit aufrecht zu halten.

Der Erfindung liegt die Aufgabe zugrunde, eine Vorrichtung zum Erzeugen von radial auf eine zylindrische Fläche wirkenden Kräften anzugeben, bei der definierte Anpreßkräfte auch für längere Zeit gewährleistet werden können.

Diese Aufgabe wird erfindungsgemäß durch eine Vorrichtung zum Erzeugen von radial auf eine zylindrische Fläche wirkenden Kräften, insbesondere von Anstell-oder Haltekräften gelöst, die aus einem zylinderförmigen Körper besteht, dessen Mantel als Zylinderfeder ausgebildet ist, deren Außendurchmesser im entspannten Zustand größer ist als der Innendurchmesser der zylindrischen Fläche und deren beide Enden durch einen Antrieb um die Federachse relativ gegeneinander derart verdrehbar sind, daß der Außendurchmesser der Zylinderfeder bei eingeschaltetem Antrieb auf einen vorgegebenen Durchmesser verkleinert wird, der kleiner ist als der Durchmesser der zylindrischen Fläche und durch Umkehren der Drehrichtung des Antriebs die Zylinderfeder sich entspannt und gegen die zylindrische Fläche drückt.

Mit der Vorrichtung nach der Erfindung können Haltekräfte mit einer kleinen Anzahl an Bauelementen erzeugt werden, was zu einer Vereinfachung der Fertigung und damit zu niedrigen Kosten führt. Darüberhinaus ist nur ein geringer Raumbedarf erforderlich, so daß die Vorrichtung mit Vorteil in einer Absperrvorrichtung für Rohrleitungen eingesetzt werden kann.

Weitere vorteilhafte Ausbildungen der Erfindung sind in den Unteransprüchen 3 bis 10 angegeben.

Ausführungsbeispiele der Erfindung sind in der Zeichnung schematisch dargestellt. Darin zeigt:

Fig. 1 eine Ausstellvorrichtung für eine Ringdichtung,

Fig. 2 eine Vorrichtung zum Ausstellen von Halteelementen einer Absperrvorrichtung für eine Rohrleitung und

Fig. 3 ein Detail zu Fig. 2,

Fig. 4 einen Teilschnitt einer als Propfen ausgebildeten Vorrichtung zum Absperren einer Rohrleitung.

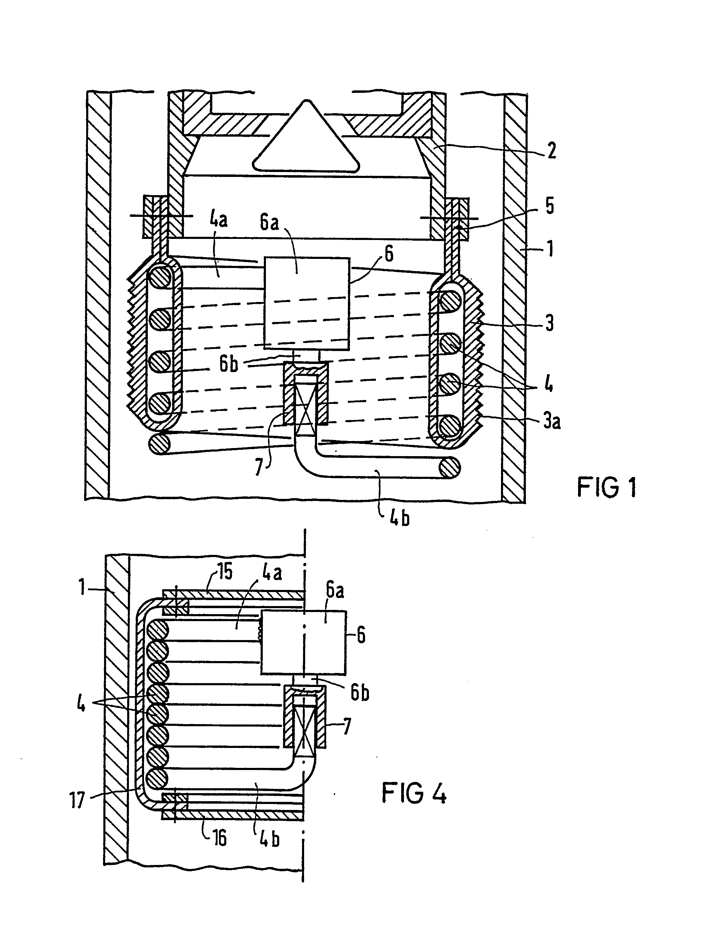

In Fig. 1 ist mit 1 ein Rohr bezeichnet, in dem ein als Ventil ausgebildeter zylindrischer Körper 2 angeordnet ist, dessen Durchmesser kleiner ist als der Rohrinnendurchmesser. Zum Abdichten des ringförmigen Spaltes zwischen dem zylindrischen Körper 2 und dem Rohr 1 dient eine Ringdichtung 3, die durch eine Zylinderfeder 4 ausstellbar ist. Die Ringdichtung 3 ist als umgelegte Manschette ausgebildet, die die Zylinderfeder 4 umgibt und an dem zylindrischen Körper 2 durch ein Spannband 5 befestigt ist. An der Außenseite der Manschette sind Dichtlippen 3a angebracht. Die Enden 4a, 4b der Zylinderfeder 4 sind aus der Manschette heraus und nach innen zu einem als Elektromotor oder Hydraulikantrieb ausgebildeten Antrieb 6 geführt. Dabei ist das eine Ende 4a der Zylinderfeder 4 mit dem Gehäuse 6a des Antriebs 6 und das andere Ende 4b über eine längsverschiebliche Kupplung 7 (Mitnehmer) mit der Welle 6b des Antriebs 6 verbunden.

Im entspannten Zustand der Zylinderfeder 4 ist der Aussendurchmesser größer als der Innendurchmesser des Rohres 1. Wird der Antrieb eingeschaltet, so werden die beiden Enden 4a, 4b der Zylinderfeder 4 gegeneinander verdreht, wodurch der Durchmesser der Zylinderfeder 4 und der Ringdichtung 3 auf einen kleineren Durchmesser als der Rohrdurchmesser verringert wird. Dabei bewegt sich das Ende 4b aus der Manschette heraus. Zum Anlegen der Ringdichtung 3 an die Rohrinnenwand wird die Drehrichtung des Antriebs 6 umgekehrt, wobei sich die Zylinderfeder 4 entspannt.

Die Manschette ist aus flexiblem Material, vorzugsweise aus Gummi oder Kunststoff.

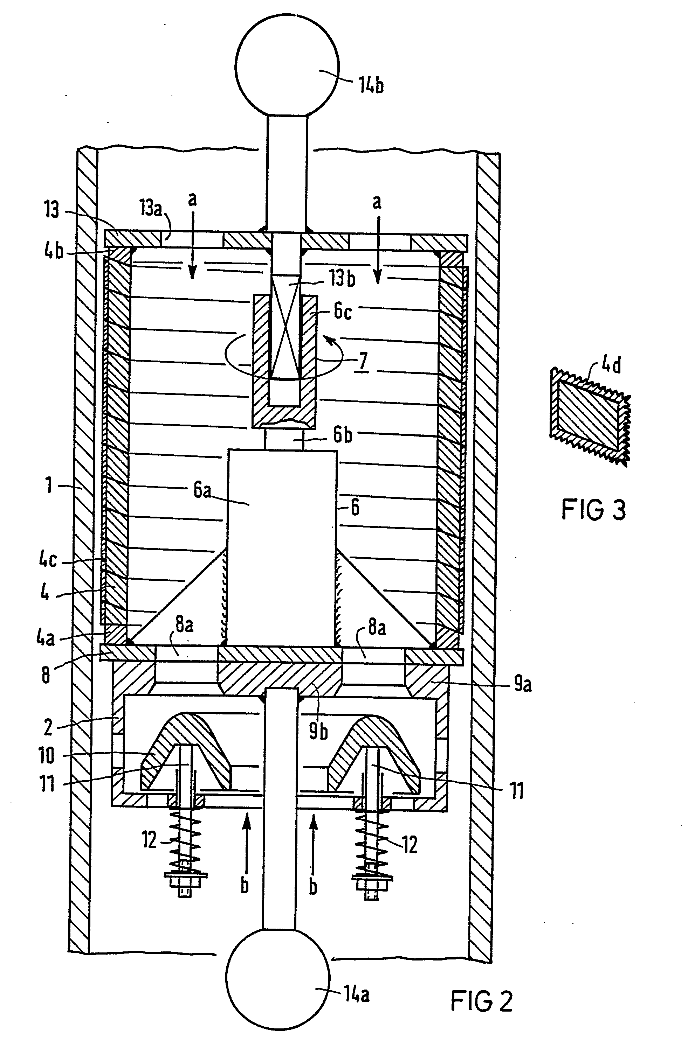

In Fig. 2 dient die Zylinderfeder 4 zum Erzeugen einer Haltekraft für einen als interne Absperrvorrichtung ausgebildeten zylindrischen Körper 2 in einer Rohrleitung 1. Der zylindrische Körper 2 hat an seinem Umfang Durchbrüche und ist an seiner Stirnseite mit einer Grundplatte 8 versehen, die Öffnungen 8a besitzt. Auf der Grundplatte 8 sind die Bauteile 9a, 9b eines ringförmigen Ventilsitzes befestigt, dem ein in Führungsstangen 11 gelagerter ringförmiger Schließkörper 10 zugeordnet ist, welcher im Normalbetrieb durch Federn 12 in der offenen Stellung gehalten wird.

Am zylindrischen Körper 2 ist an der Grundplatte 8 zum Erzeugen von Haltekräften eine Zylinderfeder 4 angebracht. Die beiden Enden 4a, 4b der Zylinderfeder sind durch einen Antrieb 6 um die Federachse relativ gegeneinander verdrehbar. Das eine Ende 4a der Zylinderfeder ist mit der Grundplatte 8 verbunden, in deren Mitte der Antrieb 6 mit seinem Gehäuse befestigt ist. Das andere Ende 4b ist an einer mit Öffnungen 13a versehenen Scheibe 13 angeordnet. Diese Scheibe 13 ist über eine quadratische Führungsstange 13b und eine ebenfalls quadratische Mitnehmerhülse 6c mit der Welle des Antriebs 6 gekuppelt.

Im entspannten Zustand ist der Außendurchmesser der Zylinderfeder 4 größer als der Innendurchmesser des Rohres 1. Zum Einführen der Absperrvorrichtung in die Rohrleitung wird der Antrieb 6 eingeschaltet, so daß der Durchmesser der Zylinderfeder auf einen kleineren Durchmesser gebracht wird als der Innendurchmesser des Rohres 1. Hat die Absperrvorrichtung eine vorgegebene Stelle der Rohrleitung 1 erreicht, so wird die Zylinderfeder 4 wieder entspannt, so daß sie sich an die Rohrleitung andrückt.

Im Normalbetrieb wird die Absperrvorrichtung in Pfeilrichtung a durchströmt. Bei einem Leck an der Eingangsseite der Rohrleitung verringert sich die Strömungsgeschwindigkeit und damit auch der auf den Schließkörper 10 ausgeübte Druck, so daß durch die Kraft der Federn 12 das Ventil geschlossen wird.

Tritt an der Eingangsseite der Rohrleitung 1 ein Rohrbruch auf, so kehrt sich die Strömungsrichtung um (Pfeil b) und das Strömungsmedium beaufschlagt die konkave Seite des Schließkörpers 10. Dies führt zu einem besonders raschen Schließen des Ventils.

Zweckmäßigerweise sind die Grundplatte 8 und die Scheibe 13 mit zentral angeordneten Kupplungsteilen 14a, 14b für die Ankupplung eines Fahrzeuges für die Versorgung, Kommunikation, Bergung und den Transport versehen.

Es ist vorteilhaft, an der Ringfeder 4 außen einen Überzug 4c mit hohem Reibungskoeffizienten anzubringen. Auf diese Weise werden bereits mit kleinen radialen Federkräften große Haftkräfte der Absperrvorrichtung erzielt.

Um eine möglichst hohe Anpreßkraft der Ringfeder 4 bei kleinem Material-und Raumbedarf zu erzielen, ist es zweckmäßig die Windungen der Ringfeder 4 mit einem eckigen Querschnitt auszubilden.

Zur Abdichtung, Vergrößerung der Haftung und Haftungsverstärkung können die Windungen der Zylinderfeder 4 von einem elastischen Mantel 4d vorzugsweise aus Gummi, umgeben sein (Fig. 3).

Nach einer in Fig. 4 dargestellten Ausgestaltung ist die Zylinderfeder 4 von einem elastischen Balg 17 umgeben, wobei die beiden Stirnseiten durch Scheiben 15, 16 abge schlossen sind. Die Enden 4a, 4b der Zylinderfeder 4 sind jeweils über die Scheiben 15, 16 und eine Kupplung 7 mit der Welle 6b bzw. dem Gehäuse 6a des Antriebs 6 verbunden. Dadurch wird eine in sich geschlossene Absperrvorrichtung in Form eines Pfropfens gebildet, der bei zusammengezogener Zylinderfeder in eine Rohrleitung eingeführt und durch Entspannen der Zylinderfeder 4 einen Verschluß bildet.

Eine zwangsweise axiale Verbindung der Führungsstange 13b (z.B. zur Verminderung der Reibung der Zylinderfeder) läßt sich durch Anwendung einer Gewindespindel erreichen. Beispielsweise kann die Führungsstange 13b mit einem Innengewinde versehen sein, in das eine zentrisch an der Grundplatte 8 starr angeordnete Gewindespindel eingreift und bei einer Drehung der Führungsstange 13b axial verschoben wird. Alternativ kann die Gewindespindel drehbar in der Grundplatte gelagert und, vorzugsweise gegenläufig zur Führungsstange 13b, angetrieben sein.

**Ansprüche**

1. Vorrichtung zum Erzeugen von radial auf eine zylindrische Fläche wirkenden Kräften, insbesondere von Ausstell-oder Haltekräften, bestehend aus einem zylinderförmigen Körper, dessen Mantel als Zylinderfeder (4) ausgebildet ist, deren Außendurchmesser im entspannten Zustand grösser ist als der Innendurchmesser der zylindrischen Fläche und deren beide Enden durch einen Antrieb (6) um die Federachse relativ gegeneinander derart verdrehbar sind, daß der Außendurchmesser der Zylinderfeder (4) bei eingeschaltetem Antrieb (6) auf einen vorgegebenen Durchmesser verkleinert wird, der kleiner ist als der Durchmesser der zylindrischen Fläche und durch Umkehren der Drehrichtung des Antriebs (6) die Zylinderfeder (4) sich entspannt und gegen die zylindrische Fläche drückt.

2. Vorrichtung nach Anspruch 1, bei der der zylindrische Körper (2) als Absperrvorrichtung ausgebildet ist, die in eine Rohrleitung einsetzbar ist.

3. Vorrichtung nach einem der vorhergehenden Ansprüche, bei der das eine Ende der Zylinderfeder (4) über eine Kupplung (7) mit der Welle des Antriebs axial verschiebbar gekuppelt und das andere Ende der Zylinderfeder (4) mit dem Gehäuse des Antriebs verbunden ist.

4. Vorrichtung nach einem der vorhergehenden Ansprüche, bei der das eine Ende (4a) der Zylinderfeder (4) über eine mit Öffnungen (8a) versehene Grundplatte (8) mit dem Gehäuse (6a) des Antriebs (6) und das andere Ende (4b) über eine mit Öffnungen (13a) versehene Scheibe (13) und eine Kupplung (7) mit der Welle (6b) des Antriebs (6) verbunden ist.

5. Vorrichtung nach Anspruch 4, bei der an der mit Öffnungen versehenen Grundplatte (8) ein ringförmiger Ventilsitz (9a, 9b) angeordnet ist, dem ein ringförmiger Schließkörper (10) zugeordnet ist.

6. Vorrichtung nach einem der vorhergehenden Ansprüche, bei der die Grundplatte (8) und Scheibe (13) mit zentral angeordneten Kupplungsteilen (14a, 14b) für die Ankupplung eines Fahrzeuges versehen sind.

7. Vorrichtung nach einem der vorhergehenden Ansprüche, bei der die Ringfeder (4) außen einen Überzug mit hohem Reibkoeffizienten hat.

8. Vorrichtung nach einem der vorhergehenden Ansprüche, bei der die Windungen der Ringfeder (4) einen eckigen Querschnitt haben.

9. Vorrichtung nach einem der vorhergehenden Ansprüche, bei der die Windungen der Zylinderfeder (4) von einem elastischen Mantel (4d), vorzugsweise aus Gummi, umgeben ist.

10. Vorrichtung nach einem der vorhergehenden Ansprüche, bei der die Zylinderfeder (4) beweglich in elastisches Material eingebettet oder von einer Manschette (3) umgeben ist.

11. Vorrichtung nach einem der vorhergehenden Ansprüche, bei der die Enden (4a, 4b) der Zylinderfeder (4) über je eine geschlossene Scheibe (15, 16) mit der Welle (6b) bzw. dem Gehäuse (6a) des Antriebs (6) verbunden sind und die beiden Scheiben (15, 16) durch einen die Zylindefeder (4) umgebenden Balg (17) aus elastischem Material verbunden sind. Z u s ammenfassung

86 P 6022

FIG 1

2
5
1
3
4
3a

4a
6a
6
6b
7
4b

FIG 4

15  4a
1       6a
6
4
6b
7
17
16  4b

FIG 2

FIG 3